# EUROPEAN PATENT APPLICATION

(11) **EP 3 985 171 A1**
(43) Date of publication of application: **20.04.2022**
(21) Application number: 20202620.9
(22) Date of filing: 19.10.2020
(51) Int. Cl.: D21J 3/00

(54) **PRODUCTION LINE FOR MOLDED FIBER PRODUCT**

(71) Applicant: Valmet Technologies Oy, 02150 Espoo (FI)
(72) Inventor: HAAVANLAMMI, Arto, 40800 Jyväskylä (FI); SIIRA, Tomi, 40100 Jyväskylä (FI)
(74) Representative: Kespat Oy

(57) **Abstract**

The invention relates to a production line for molded fiber product. The production (10) line includes several sequential process units (13, 14, 19, 18) and equipment for controlling said process units (13, 14, 19, 18). The equipment are arranged as at least one control unit (47) which is situated in connection with one of the process units (13, 14, 19, 18).

## Description

The present invention relates to a production line for molded fiber product, which production line includes several sequential process units and equipment for controlling said process units.

US-patent application number 2005/0150624A1 discloses a method and an apparatus for the manufacturing of molded fiber body using low consistency fiber slurry subject to vacuum forming and thermo curing. The use of porous material as mold inserts for both vacuum forming and thermo curing stations provides improved productivity and enables ease of mold release. In the forming the top half of the mold moves in the necessary path to transfer the wet fiber body to the thermocuring station.

Traditionally controlling of the process is made manually or automatically. Often the production is automatic, but the packaging of the products is handcrafted. This of course requires human operator and is not cost-efficient. Often the control stage is the last stage of the process, so faulty products can be removed only then. Faulty products may stick, interrupt, or even damage the process units, if removed only in the end. Also, the tuning of the process line takes a long time and there are little variations of the product or the processes themselves. In other words, one production line manufactures only one kind of products.

In the known technology, the top half of the mold or in other words the upper mold moves between two process stages. Thus, the heavy upper mold needs robust supports. Also, the heavy upper mold has a great inertia making the moves of the upper mold very slow. And more, when using slurry, it takes time to vacuum fibers to the product surface of the mold. These prolong the forming and pressing stages and the whole production cycle. After thermo forming and hot pressing, the semi-finished products are moved with vacuum operated transfer devices, like manipulators with one suction cap per product. The manipulators have complex structure requiring a lot of space. This lengthens the production time and the production line itself. Also, it takes time to develop vacuum strong enough to hold the products as well the movements in different directions. So, the slow forming and transfers are in pair in the prior art processes.

The object of the invention is to provide for molded fiber product a new production line, which is more versatile but faster than before. The characteristic features of the production line according to the invention are stated in the accompanying Claims. The production line includes several options to tune the production line and the product itself. There may be several units with versatile combinations. The processes are uninterrupted and quick.

The invention is described below in detail by referring to the enclosed drawings, which illustrate some of the embodiments of the invention, in which
- Figure 1a: shows a side view of a production line for molded fiber products according to the invention,
- Figure 1b: shows a side view of the production line with covers,
- Figure 2: shows a top view of a production line equipped with transfer devices according to the invention,
- Figure 3: shows another top view of a production line equipped with transfer devices according to the invention,
- Figure 4: shows still another top view of a production line equipped with transfer devices according to the invention,
- Figure 5: shows schematically the production stages of the production line according to the invention,
- Figure 6a: shows one pair of molds for the forming stage,
- Figure 6b: shows one pair of molds for one hot-pressing stage,
- Figure 7: shows a schematic perspective view of the transfer device according to the invention,
- Figure 8: shows a partial enlargement of the transfer device of Fig. 7,
- Figure 9: shows a schematic perspective view of another transfer device according to the invention,
- Figure 10: shows still another schematic perspective view of another transfer device according to the invention.

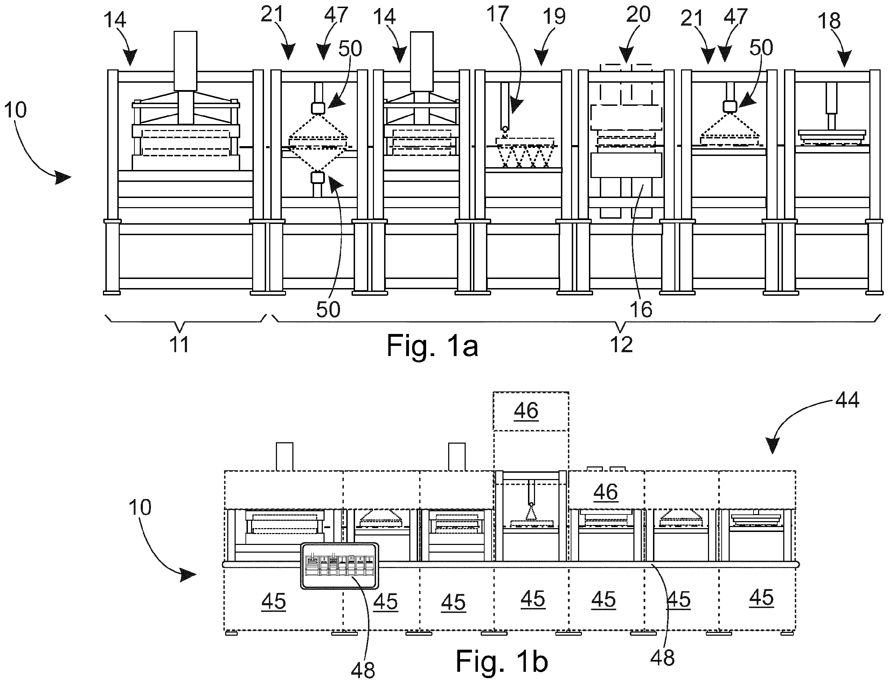

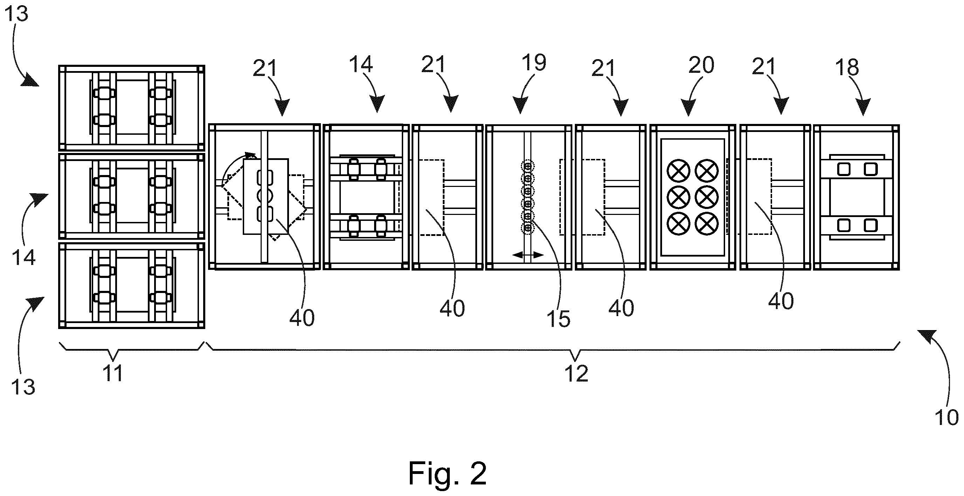

Fig. 1a shows a perspective view of a production line 10 according to the invention for molded fiber products. The top view of the same production line 10 is shown in Fig. 2. Like in traditional fiber-web making, there is a wet end 11 and a dry end 12 in the production line. The wet end includes mainly forming processes while the dry end includes drying and other finishing processes. However, here there are two forming stages, more specifically two forming units 13 arranged side by side. In addition, there are two hot-pressing stages, more specifically two hot-press units 14 arranged one after another. And more, one of the hot-press units is arranged between said two forming units. In this way, the production line is compact. Also, process cycle is very short like five seconds at the maximum. In other words, forming takes only a few seconds and the semi-finished products must be transferred quickly to the next stage. With this layout, the transferring distances are minimized and both forming stages can act as fast as they can. Forming takes more time than hot pressing, so there are two forming units. In other words, the hot-press stages takes even shorter time than the forming stage. Then the hot-press stages can be sequentially. Here the forming units and the first hot-press unit belong to the wet end and rest of the process units belong to the dry end, starting from the second hot-press unit. If hot pressing takes about five seconds, forming takes few seconds longer but less than twice the hot-pressing time. The process cycle can be varied according to the basis weight of the product so that the heaviest products can have a second or two longer process cycle. Other processes in the dry end are barrier coating, air drying of the barrier, cutting unit with quality checking, and finally packing. All units are integrated to each other as a complete production line for molded fiber products.

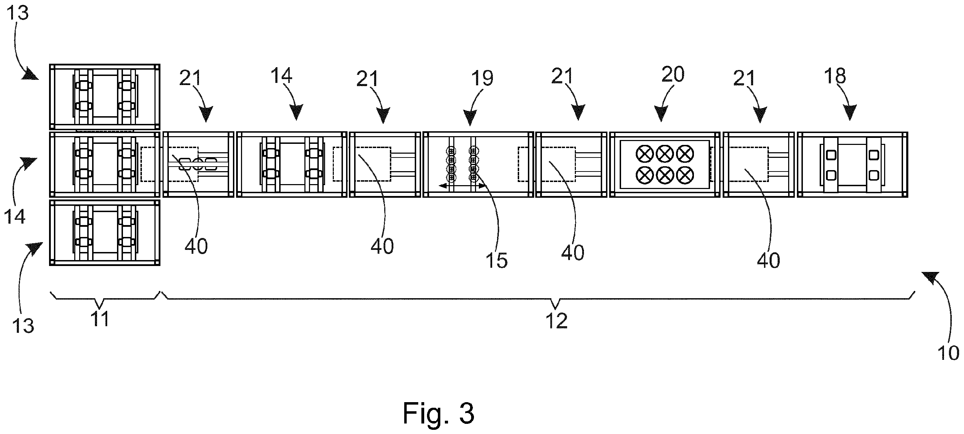

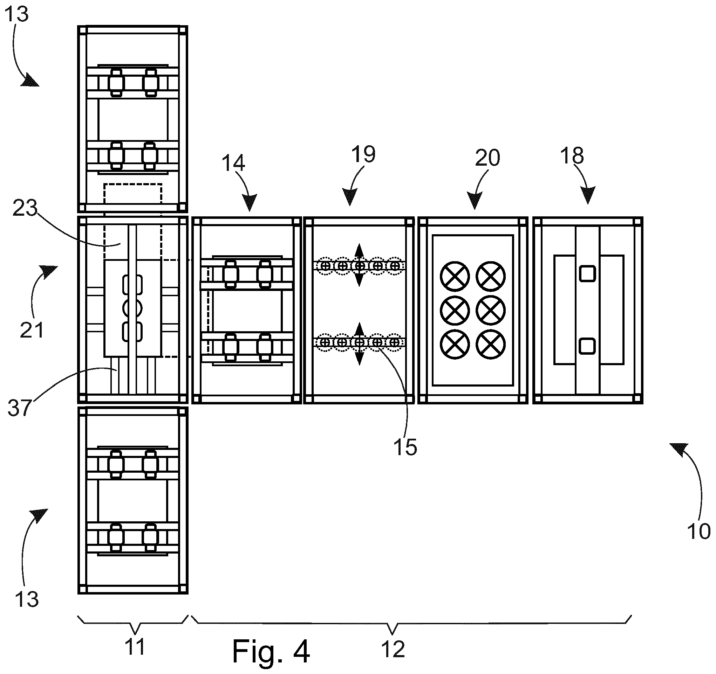

The dry end processes follow the same design baselines as the wet end processes. The second hot-press unit is like the first one. Then there is barrier coating made with spraying through precision nozzles. There is at least one row of nozzles arranged to move to each row of products and advantageously there is a nozzle per product in the row. In Fig. 3 there are two rows of nozzles 15 moving lengthwise. Also, there can be one on more rows of nozzles 15 moving in the transverse direction (Fig. 4). For example, there are biodegradable and recyclable additives for coating molded fiber products. Plant-based barrier coatings and additive technologies are recyclable, biodegradable, compostable and food-safe. These barrier coating solutions can be applied to produce a wide range of high-quality cellulose-based products that are oil, grease, and water resistant. Here air drying for barrier is executed with fans. Advantageously, drying may be with individual blows arranged to blow with nozzles into every product. Also, the blank or the nozzles moves vertically. In this way the blowing is from advantageous distance, which is less than 20 mm, more advantageously 10 less than mm from the surface of the product. In Fig. 1a, there are blowing nozzles 16 on both sides of the blank showing mainly the option for different facing of the barrier coated surface. In practice, only the wet barrier is dried. The third option is an oven with elevator transport. Also, printing is possible to add decorations or logos, for example on the finalized products. In Fig. 1a, printing 17 is at top while the barrier is sprayed from below. Separation of products from blank to individual pieces is done in the separation unit 18 at the end of the dry end 12. In other words, a blank is a semi-finished panel including several products. Separation in done, for example with mechanical die cutting machine. Alongside die cutting, there can be an automatic visual inspection system to verify high quality of the finalized product. At the dry end, there are sensors, imaging devices, or probes enabling quality control and also adjusting the process online. For example, by adjusting the process cycle and other process parameters it is possible to affect to the quality and the residual moisture of the final product.

Figures 2, 3 and 4 shows three different types of production lines wherein the blank is horizontally moved between the production stages. The production line consists of several units connected to each other. First there is the wet end 11 wherein there are one hot-press unit 14 with two forming units 13. The blank is formed in the one of the forming units 13 and then moved to the first hot-press unit 14. Then the blank is moved to the second hot-press unit 14 and via a barrier unit 19 to drying unit 20 and finally to the separation unit 18. In these embodiments, the blank is rectangular with size of about 800 - 1200 mm. In Fig. 2 the units of the wet end 11 are longitudinally. Thus, the movements in the wet end are minimized. Before the second hot-press unit 14, the blank is rotated 90 degrees. Then the units of the dry end are transversely. Again, the movements in the dry end is minimized. Simultaneously the total length of the production line is minimized. After the first hot-press 14 unit advantageously there is a transfer unit 21 with some measurements. Also, rotation of the blank is possible, as mentioned earlier.

The production line shown in Fig. 3 has the same units in the dry end 12 than in Fig. 2, but those units are longitudinally. Then, the rotation of the blank is unnecessary. Also, the length of each unit may be varied. Fig. 4 shows a hybrid version where a transfer unit 21 is between two forming units 13 forming the wet end 11. Then there is only one hot-press unit 14 in the beginning of the dry end 12. Here, the transfer units are integrated in the barrier unit 19 and separation unit 18. This makes the production line extremely compact and short. The transfer unit may be integrated also in some other unit.

As shown, each process unit may have a different structure compared to other unit of the production line. For example, the forming units together with the first hot-press unit may form together a single unit having a common lower frame. In the dry end, the units are merely as independent modules, but here also, there may be a common lower frame. At the end of the dry end there may be a finishing unit where two or more functions like sorting, inspecting, and packaging are included in one unit.

The invention relates to a transfer device or devices of a production line for molded fiber product. The transfer device has linear movement to move the blank between the production stages. Here, the transfer device is arranged as a transfer unit 21 and in the production line 10 there are several transfer units 21 arranged in or between production stages and to move the molded fiber product through the whole production line 10. During manufacturing there are several molded fiber products in one blank. In Fig. 2 and 3 each transfer unit 21 is between two process units while in Fig 4. the transfer unit 21 is integrated into one or more process stages. In Fig. 4, the dry end 12 has four process units and all of them has own transfer unit inside. However, with separate transfer units it is possible to check the blank during manufacturing and even take out and wreck the blank in the middle of the process line if something is wrong with the product. All shown three production lines 10 are T-shaped with the wet end 11 followed by the dry end 12.

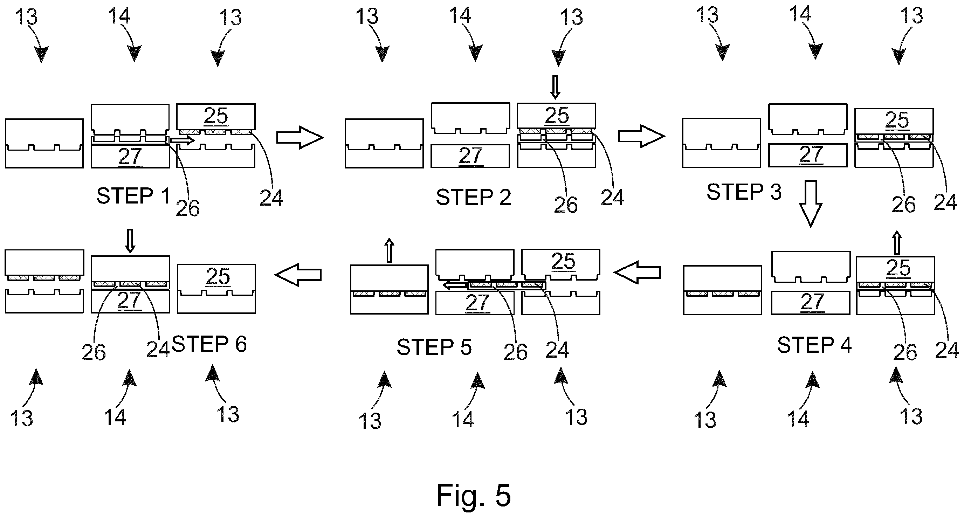

Fig. 5 shows the principle of the wet end 11 which consists of three processes namely two forming stages and the first hot-pressing stage in therebetween. Here, two forming units 13 feed the hot-pressing unit 14 with formed blanks all the time, so that all the processes are ongoing all the time. The forming units are identical, and they execute the same forming process, so that manufacturing of the blanks is continuous all the time. While the other one starts the process, the other one finishes. Here, the positive half of the mold is upper, and the negative half is lower. The upper mold moves vertically, while the lower one is fixed. The positive mold descends, and foam is extruded between the upper and lower mold. Then the sliding mold, here the lower mold slides and stops under hot press and upper mold of the hot press descends to dry the blank. Which one is positive or negative and which one is moveable or fixed can be selected when setting of the production line.

Here, in the wet end 11 the transfer unit 21 includes a movable sled 23 arranged to move the molded fiber product or the blank 24 in this stage from a forming unit 13 to a hot-pressing unit 14. First (step 1) the sled 23 slides from the first hot-press unit 14 under the first forming unit 13, where ready formed product blank 24 is waiting. In Fig. 5, the blank 24 is shown with a dense hatch. Then, the upper mold 25 of the first forming unit 13 descends to hand the blank 24 over for the sled 23 (step 2). In step 3 the sled 23 collects the formed product blank 24 and next the upper mold 25 of forming rises back to the top position (step 4). Then, the sled 23 slides back under the hot-press unit with the blank 24 (step 5). At step 6, the upper mold 25 of the hot-press unit 14 descends to dry the just-formed product blank, while the second forming unit is ready with a new formed blank, and simultaneously the first forming unit starts the process again. When using foamed fiber, the production cycle in the hot press is about five seconds at the maximum. At the same time, the forming stage takes eight to ten seconds especially with multi-layer products. With slurry the forming stage takes several tens of seconds.

Actually, the sled 23 has a partial mold 26 having contours corresponding the molded fiber product. Then only a part of the mold is movable. Then it can be moved quickly. More precisely, the transferring part in the wet end is only the top of the lower mold which is light weight part. Said light structures are at least partially porous and/or of lattice structure, which is explained later. Only the outer side and lower surfaces are of solid metal.

At the wet end 11, the sled 23 is arranged to move between two forming units 13 between which there is one hot-press unit PU. In this point the hot-press unit acts also as the transfer unit picking up the blank from two forming units. In Fig. 5 the hot-press unit 14 is in the middle. The partial mold 26 moves horizontally back and forth. At the hot-press unit 14 there is an anvil 27 arranged under the sled 23 and the partial mold 26. The anvil is the steady support for light weight partial mold which is made at least partly of lattice structures by additive manufacturing. The anvil may also have inlet and/or outlet connections. With the anvil, the partial mold will withstand the high pressure of the hot press.

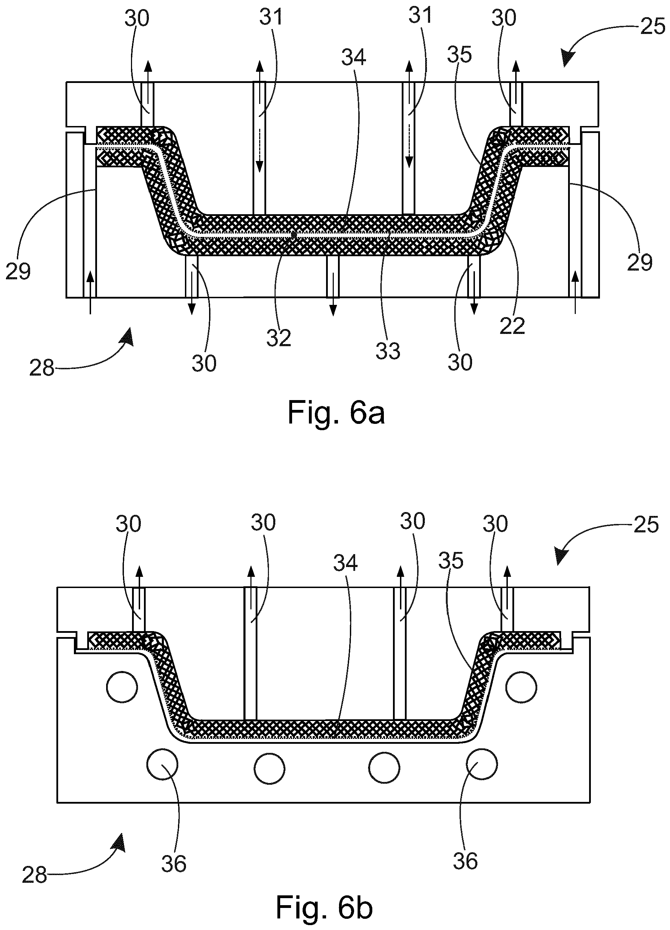

Fig. 6a shows a pair of molds used in the production line according to the present invention. The mold is for manufacturing of a molded fiber product. The pair of molds in Fig. 6a is formed of an upper mold 25 and a lower mold 28. This pair is for forming of the molded fiber product. Thus, there are channels 29 for feeding foamed fibers between the molds. Here, the channels 29 are in the lower mold 28, which preferably is stationary while the upper mold 25 is vertically movable. Thus, the channels are easy to arrange. During the forming, air and water drains out via exits 30 arranged into the molds 25 and 28. Here, some of the exits may act as specific connections which are combined blowing and vacuum connections. Here, the upper mold 25 includes two specific connections 31 and blowing is shown by arrows with dashed line. By blowing the just formed product is easily detached from the upper mold after forming. The specific connections are useful in both lower and upper molds. On other hand, the specific connections may also feed fibers into the cavity 32 defined the pair of molds and then during the forming water runs out via the same connections. This ensures the even filing of the cavity. Some feeding channels outside product surface are possible and it also enables the whole product surface to be made with porous structures. Also, the distance and number of the exits 30 may be used to control dewatering effectivity. For example, the vertical wall of the product may need more effective dewatering than horizontal bottom of the product. The side walls and upper corners are far from the exits at the bottom. So, there may be more exits.

As mentioned earlier, the mold 25 or 28 includes a porous product surface 33 made by additive manufacturing. At least a part of the product surface 33 is in form of a layer 34 without defined holes. Thus, the porosity of the layer is small enough to drain air and water out of the product during the forming and pressing, but to still hold the fibers on the product surface of the mold. In other words, the porous layer is capable of separating fibers from fluid. This is important when using foam where a mixture of fibers, water and air is led between two molds. In practice, foam is carrying the fibers for the forming. In foam forming technology aqueous foam instead of water is used as a carrier medium in the manufacturing process of fiber-based products. Under the layer 34 there is a supporting lattice 35 which enables flow in every direction to the nearest exits.

Fig. 6b show a pair of molds for hot pressing. Advantageously, the formed product is hot pressed twice, but more generally, the formed product is hot pressed from one to three times. In Fig. 6b the lower mold 28 is smooth and there are cooling or heating channels 36 increasing the performance of the tooling depending on the application. In additive manufacturing the channels can be easily applied inside any part of the mold, like the supporting structures or the porous layer itself. Here, the upper mold 25 is porous, and fluid is drained through it via exits 30. In the next hot-press unit, the upper mold is smooth, and the lower mold has a porous product surface.

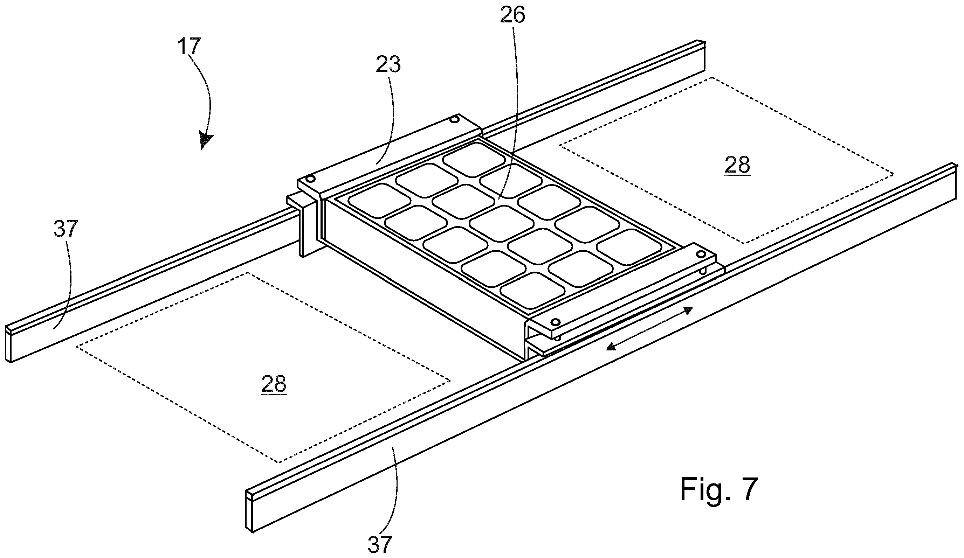

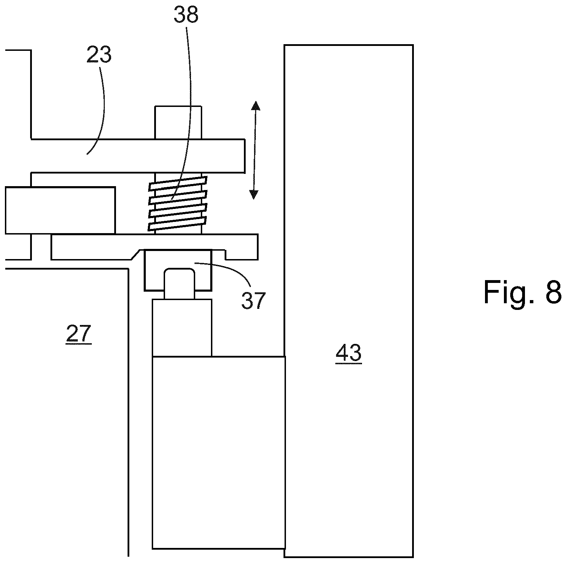

In Fig. 7 the sled 23 is supported with linear conductors 37 arranged to a distance from the partial mold 26. Thus, the conductors 37 are away from the hot parts. In other words, the steel conductors are placed well below the high temperature pressing molds. Then the linear conductors stay straight without thermal expansion. Also, the conductors are supported only to the middle unit, here to the first hot-press unit. Then possible heat expansion would not extend to the adjacent units. In addition, between the sled 23 and the linear conductors 37 there is a vertical movement with spring 38 (Fig. 8) . In this way the partial mold 26 can reach the stationary anvil 27 when the upper mold descends without any excess forced to the linear conductors 37. This movement is only couple of centimeters but is crucial for the functionality of the sliding mechanism. For example, the linear conductors are equipped with one on more linear motors. The linear conductors together with the sled and the partial mold need little space. Also, when the transfer unit is arranged between production stages, the transfer unit itself is far away from the hot processes. The transfer units do extend to the total length of the machine, but this tradeoff is acceptable to ensure reliable transferring between the processing units. The transfer unit moves the blanks in fast, but secure and robust way. The sliding mechanism allows the partial mold to slide between process stages without interfering the process itself.

As explained earlier, in the wet end, the transfer unit functions also as the hot-press unit. The light sliding partial mold can be accelerated and decelerated fast without big forces. Also, the sled under the actual partial mold utilizes springs, so that the partial mold can descend enough to reach the fixed anvil and so the hot pressing is possible to execute (Fig. 7). After the blank is formed, suction is used to lift the blank with the upper mold. When the upper mold rises with the blank, the moving partial mold slides underneath it. Vacuum suction is turned off and product blank gently drops on top of the partial mold. The partial mold slides and transfers the blank to the hot-pressing unit and the forming process starts again. With an innovative spring structure, it is possible to keep the sled light but functional.

As mentioned above transferring in wet end is made with linear motors and between wet end and dry end, as well as between rest of the units in the dry end, with transfer units. According to the invention, in the dry end the transfer unit 21 includes a transfer table 39 arranged between two process stages. In other words, the transfer table can move the blank between the process units. The transfer table may also rotate the blank for the next process stage, like in Fig. 2. Basically, the transfer unit operates between two process stages or process units. The transfer unit may also operate in three preceding process units. For example, the transfer plate takes the blank from the first hot-press unit and then moves it via the transfer unit itself to the barrier unit. Also, in the transfer unit there may be some processing or at least some measuring or inspecting of the product. Thus, the transfer unit is not just for transferring but also for processing and inspecting.

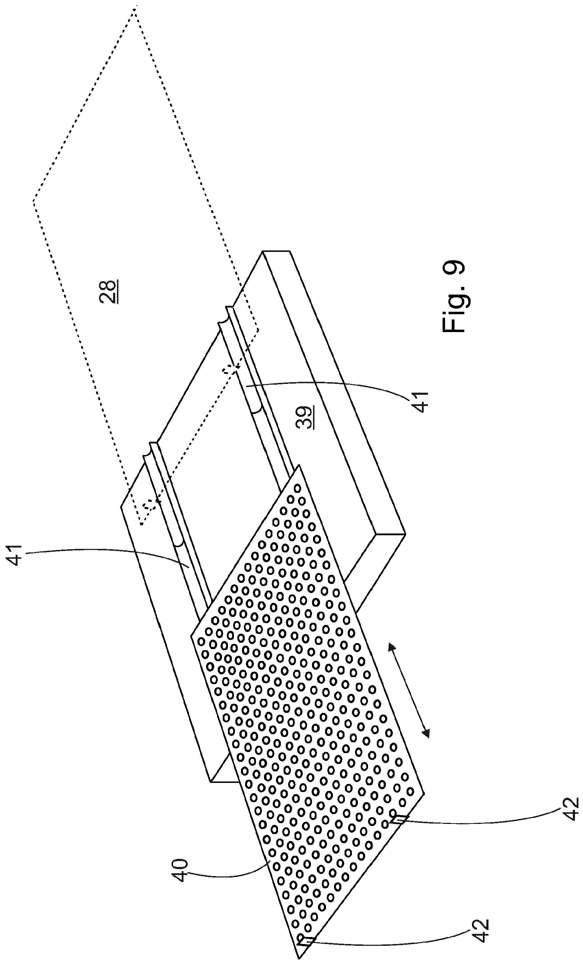

Fig. 9 shows one embodiment of the transfer table 39. Here, in the transfer table 39 there is a perforated plate 40 arranged to move the molded fiber product between two process stages. The perforation or another porous structure reduces the weight of the plate. Also, it is possible to arrange vacuum in connection with the plate for holding and support the blank during transfer. Advantageously, the perforated plate 40 is supported with one or more two-way sliders 41. In other words, the sliders slide both directions. In this way the plate can reach from a preceding unit to the next unit. In Fig. 9 the other extreme end is shown with dashed line. Also, in this way the plate stays a very short time in one unit. For example, the plate will stay only few seconds in between the high temperature pressing molds. Thus, heat problems, like heat expansion can be avoided. Advantageously, each two-way slider 41 is telescopic. This extends the trajectory of the plate.

While the plate moves rapidly, the blank must be hold somehow. One simple and efficient option is vacuum through the perforated plate. Another option is end stoppers. In Fig. 9 the perforated plate 40 has end stoppers 42. The blank is dropped onto the plate and the end stoppers holds the blank during rapid transfer. Instead of end stoppers, the plate may have edges all around. Even the transfer unit are independent they can be synchronized together. For example, all plates may move simultaneously forward and then back together. On the other hand, movements can be preset so the forces to the frame of the production line can be minimized.

Transfer unit is approximately half of the length of the processing unit units, while rest of the dimensions are kept the same for modulation and standardization reasons. The actual transfer table and especially the plate are kept as light as possible, to use as little force for acceleration and deceleration between units as needed. Transfer table uses small electric motor as driving force and ball bearings inside the telescopic sliders or other rails keeps the movement smooth. Advantageously, all transfer units are identical and in same height, which is possible because of standardization of the processes. After receiving the blank, transfer table slides to the next unit and lays the blank down on top of fixed bottom plate. As Shown in Fig. 4, the transfer table 39 is possible to attach inside of on other process unit. The sliding mechanism allows sliding between process stages without interfering the process and with remarkably lower risk of heat expansion.

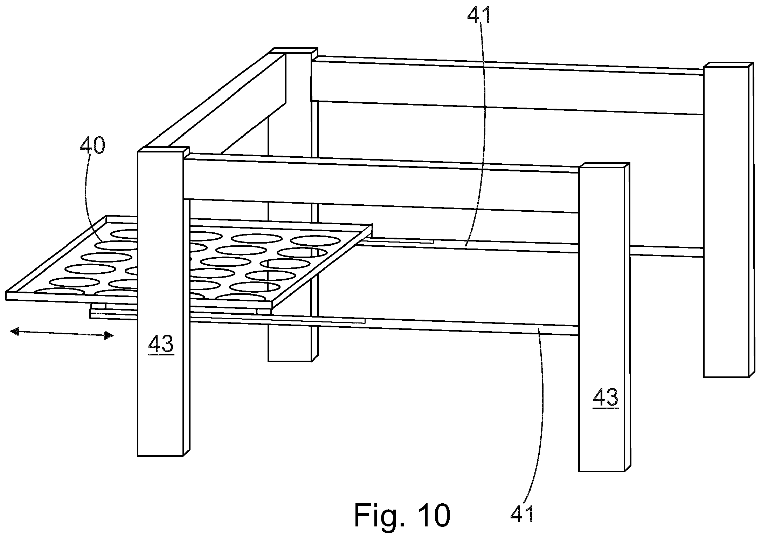

In Fig. 9, the two-way sliders 41 are under the transfer plate TP. The sliders may be also on the side fixed to the frame of the transfer unit or supported from above. Perforated plate makes the plate light. Also, the transfer plate needs little space in vertical direction. Also, it is easy to drop the blank to the top of plate in the hot-press unit, for example. The plate may be made of metal net or like with sufficient rigidity. However, the holes in the plate may be in size of the product or even bigger. In Fig. 10, the plate 40 has as many big holes than the blank has products. Then the plate or cup may partly go through the plate via large holes or reveal the whole product via the hole. Thus, the blank will be steadily in hold during the movement. Also, one or both sides of the product is accessible for treating or inspection. In other words, the transfer table could be in the unit during the process in question. Then separate transfer units would be unnecessary which will shorten the whole production line. In Fig. 10 the sliders 41 are fixed to the frame 43 and they are telescopic. In this way, the plate extends both to the preceding unit and to the next unit also. It the transfer unit, there may be some process stage or at least some inspection and measuring.

It is also possible to set different kind of transfer devices to work simultaneously in one transfer unit. This speed up the movement of the blank. Also, the different transfer devices may move to the same direction even simultaneously. For example, the liner sliders may be supported by link arms forming another transfer device. Then, with two simultaneous movements the blank is moved in two seconds or less from one process unit to another. Another embodiment is where there is a gripper together the transfer plate in the transfer unit. Thus, the transfer table brings the blank to the transfer unit and then the gripper takes the blank in hands and the transfer table moves back. Now the blank is bald from one side, so for example the spraying of barrier is possible. After spraying, the gripper hand over the blank to the next transfer plate or another transfer device to move the blank further.

The gripper may include several suction caps or other means to hold the blank. There is one suction cap for each product or at least as many as necessary to hold the blank. The gripper may move vertically and/or horizontally. Also, the gripper may move sideways to remove the defective blank out of the process line. When the blank has rigidity enough, parallel belt conveyors may be used instead of the transfer plate especially after drying. The belt will rotate in one direction without back and forth movement. This speeds to movement.

Fig. 1b shows the production line 10 according to the invention including several sequential process units 13, 14, 19, 18 and equipment for controlling said process units 13, 14, 19, 18. According to the invention, the equipment are arranged as at least one control unit 47 which is situated in connection with one of the process units 13, 14, 19, 18. In this way, the production line and even every process unit can be adjusted and thereby tune the properties of the final product as desired. The control unit may be before or after the process unit. Thus, it is versatile to form the production line for each product. Preferably the control unit 47 is arranged before the separation unit 18. Then, for example to quality of the can be diagnosed before separation. On the other hand, preferably the control unit 47 is arranged after the forming unit 13 and/or the hot-press unit 14. Then, the preceding units can be quickly adjusted if needed.

There is also a control unit 47 is placed between process stages in the dry end to measure and control of the process stage, especially the forming and hot pressing. The control unit can be used also for measurement and quality inspection of the products. According to the invention, the control unit 47 includes analysis devices 50 for a blank 24 including the molded fiber product during manufacturing. Also, it is possible to remove defected products from the production line after every process stage. In other words, faulty products can be removed from the process at the control unit. Furthermore, the control unit can be used to control the process of the production line according to the measured data by adjusting the preceding and/or following process stage or stages. In other words, the control unit 47 includes means for controlling the next and/or preceding process units 13, 14, 19, 18 and/or changing operating cycles timing of the process units 13, 14, 19, 18. This is highly valuable and allows high level of automation, but also to optimize the processes all the time. This affects to the lifetime of the process parts and therefore the production line itself too. Transfer table can also be placed inside the control unit. Other transfer methods can be also used alongside of the transfer tables.

The production line 10 includes a frame 43 having cover panels 44 a part of which is transparent and/or openable. Thus, the production line is closed at the sides ensuring occupational safety. At the bottom there are fixed panels 45 which can be detached if necessary. The upper panels 46 are two-part with transparent lower part. When the upper panels are in place, the operator can monitor the processes through the transparent lower part. If the blank jams, for example, the operator can lift or otherwise open the upper panels of the process unit in question and remove the jammed blank. Alternatively, only the transparent part may be openable or liftable while other panels are fixed. Also, the blank may be discharged automatically or semi-automatically without stopping the production line. Also, the production line 10 or at least the control unit 47 include ventilation for solidify the conditions especially for analysis. In this way the processes and the analysis of the product stay stable and reliable.

The control unit is placed between the process units in the dry end. Length of the control unit is approximately 1400 mm, more commonly 1000 - 1500 mm. Otherwise same dimensions apply as with other process unit frames. Control unit is also modular, so easy attachment to the production line is ensured. For example, the dry content of the blank is measured after the first hot-press unit and then the second hot-press unit is adjusted, if necessary. Also, the temperature, moisture and other properties may by measured during the manufacturing. And more, the shape and dimensions of the blank may be detected with camera machine vision, for example. Preferably, the size of the control unit 47 is bigger than a blank 24 including the molded fiber product during manufacturing. In this way, the whole blank can be measured at one time. Alternatively, the blank may be measured during the linear movement of the blank.

According to the invention, the analysis devices 50 are arranged to face at least one of the sides of the blank 24 wholly. Then, the whole side can be measured or otherwise analyzed at one time. Is possible, both sides of the product are analyzed simultaneously. Like in Fig. 10, the transfer device 39 is a perforated plate 40 having holes big enough to analyze whole or at least part of the molded fiber product. Here, the upper side is open for measuring and the lower side is mostly open.

The control unit is used to measure and inspect product, and even control the processes of the production line. Advantageously, one control unit is placed between every process stage in the dry end with possibility to attach transfer table inside of it. In this way the blanks can be transferred in fast, but secure and robust way. Control units do lengthen the total length of the production line, but they ensure reliable, controlled, and synchronized processes. Also, the process may include some inspecting devices.

Fig. 1b shows one control panel 48 which is here detached to a handrail 49. The control panel may be sled back and forth according to need. preferably, the control panel 48 is a touch screen. Alternatively, there can be several control panels which are supported with arms from to top enabling the cover panels to open. Also, the control panel may have a stand fixed to the floor. And more, VR-glasses with augmented reality may be utilized.

## Claims

1. Production line for molded fiber product, which production (10) line includes several sequential process units (13, 14, 19, 18) and equipment for controlling said process units (13, 14, 19, 18), **characterized in that** the equipment are arranged as at least one control unit (47) which is situated in connection with one of the process units (13, 14, 19, 18) .

2. Production line according to claim 1, **characterized in that** the control unit (47) is arranged before the process unit (14, 19, 18), preferably a separation unit (18) including to the production line (10).

3. Production line according to claim 1, **characterized in that** the control unit (47) is arranged after the process unit (13, 14, 19, 18), preferably after a forming unit (13) and/or a hot-press unit (14) including to the production line (PL).

4. Production line according to claim 1, **characterized in that** the control unit (47) is integrated in the process unit (13, 14, 19, 18), preferably into a barrier unit (19) and/or a separation unit (18) including to the production line (10).

5. Production line according to any of claims 1 - 4, **characterized in that** the size of the control unit (47) is bigger than a blank (24) including the molded fiber product during manufacturing.

6. Production line according to any of claims 1 - 5, **characterized in that** the control unit (47) includes analysis devices (50) for a blank (24) including the molded fiber product during manufacturing.

7. Production line according to claim 6, **characterized in that** the analysis devices (50) are arranged to face at least one of the sides of the blank (24) wholly.

8. Production line according to claim 6 or 7, **characterized in that** the analysis devices (50) are arranged to act during the linear movement of the blank (24).

9. Production line according to any of claims 1 - 8, **characterized in that** the control unit (47) includes means for controlling the next and/or preceding process units (13, 14, 19, 18) and/or changing operating cycles timing of the process units (13, 14, 19, 18).

10. Production line according to any of claims 1 - 9, **characterized in that** the control unit (47) includes a transfer device (39) arranged to move molded fiber product between two or three process units (13, 14, 19, 18).

11. Production line according to claim 10, **characterized in that** the transfer device (39) is a perforated plate (40) having holes big enough to analyze whole or at least part of the molded fiber product.

12. Production line according to any of claims 1 - 11, **characterized in that** the transfer device (39) is arranged to remove defected molded fiber product from the control unit (47) .

13. Production line according to any of claims 1 - 12, **characterized in that** the production line (10) includes a frame (43) having cover panels (44) a part of which is transparent and/or openable.

14. Production line according to claim 13, **characterized in that** the production line (10) or at least the control unit (47) include ventilation for solidify the conditions especially for analysis.

15. Production line according to any of claims 1 - 14, **characterized in** the control unit (47) includes a control panel (48), which preferably is a touch screen.
